# EUROPÄISCHE PATENTSCHRIFT

(11) **EP 1 169 570 B1**
(45) Veröffentlichungstag und Bekanntmachung des Hinweises auf die Patenterteilung: **06.07.2005**
(21) Anmeldenummer: 00918835.0
(22) Anmeldetag: 24.03.2000
(51) Int. Cl.: F03D 11/04

(54) **OFFSHORE-WINDKRAFTANLAGE**
OFFSHORE WIND POWER INSTALLATION
INSTALLATION EOLIENNE SOUS-MARINE

(30) Priorität: 29.03.1999 DE 19914244
(43) Veröffentlichungstag der Anmeldung: 09.01.2002
(73) Patentinhaber: Meier, Hans, 82024 Taufkirchen (DE)
(72) Erfinder: Meier, Hans, 82024 Taufkirchen (DE)
(74) Vertreter: Zinnecker, Armin, Dipl.-Ing.
(86) Internationale Anmeldenummer: PCT/EP2000/002640
(87) Internationale Veröffentlichungsnummer: WO 2000/058621

(56) Entgegenhaltungen:
- WO-A-93/22555
- WO-A-94/09272
- WO-A-99/02856
- DE-A- 3 003 873
- DE-A- 3 113 247
- DE-A- 3 224 976
- DE-A- 19 727 330
- FR-A- 2 171 478
- FR-A- 2 579 682
- NL-C- 1 004 066
- NL-C- 1 008 318
- FERGUSON M: "STRUCTURAL AND ECONOMIC OPTIMISATION OF OWEC SUPPORT STRUCTURE: CONTRIBUTION TO THE JOULE III PROJECT OPTI-OWECS" WIND ENGINEERING,GB,MULTI-SCIENCE PUBLISHING CO., BRENTWOOD, ESSEX, Bd. 21, Nr. 5, 1997, Seiten 339-350, XP000725996 ISSN: 0309-524X

## Beschreibung

Die Erfindung betrifft eine schwimmfähige, drehbar verankerte Windkraftanlage zur Erzeugung elektrischer Energie.

Der erzielbare Stromertrag bei Windkraftanlagen ist aufgrund der lokalen Windbedingungen in hohem Maße standortabhängig. Darüber hinaus ist bei der Aufstellung von Windkraftanlagen eine Reihe von Richtlinien zu beachten, die ebenfalls standortabhängig sind. Im küstennahen Binnenland können große, moderne Anlagen im Bereich der Rentabilität arbeiten. Im küstenfernen Binnenland können derartige Anlagen allerdings im allgemeinen nur unter Ausnutzung von Subventionen im Bereich der Rentabilität arbeiten. Bei Standorten im Binnenland müssen die Kriterien des Landschafts- und Lärmschutzes erfüllt werden. Weiterhin ist das örtliche Baurecht zu beachten. Es muß mit langwierigen Genehmigungsverfahren gerechnet werden. Femer sind die Grundstückskosten erheblich.

Es sind bereits fundamentierte Offshore-Anlagen bekannt, durch die der Vorteil des guten Windangebots auf See genutzt wird. Da diese Anlagen allerdings ein festes Fundament benötigen und mit großem Aufwand auf See aufgestellt und montiert werden müssen, ist der Bau mit hohen Kosten verbunden. Sie sind weiterhin auf eine gute Bodenbeschaffenheit und auf eine beschränkte Wassertiefe angewiesen, was die Errichtung solcher Anlagen schwierig und teuer macht.

Alle fundamentierten, feststehenden Windkraftanlagen (auf Land und auf See) haben das Problem der gegenseitigen Abdeckung bei bestimmten Windrichtungen, wodurch die Wirksamkeit eines Verbundes von mehreren Rotoren beeinträchtigt wird. Um diesen Effekt zu minimieren müssen zwischen den einzelnen Generatoren des Verbundes gewisse Mindestabstände eingehalten werden, wodurch zumindest im Binnenland die Grundstückskosten zusätzlich in die Höhe getrieben werden.

Aus der WO 99 02856 A1 ist eine Windkraftanlage bekannt, bei der die Rotoren mittels eines Ankers über mehrere Trossen drehbar am Meeresgrund verankert sind. Die Anlage ist aufgrund von Schwimmkörpern, die nach Art von Schiffen ausgestaltet sind, schwimmfähig.

Aus der DE 197 27 330 A1 ist eine Offshore-Windkraftanlage nach dem Oberbegriff des Anspruchs 1 bekannt. Die DE 30 03 873 A1 und WO 93 22555 A1 zeigen ähnliche Offshore-Windkraftanlagen.

Aufgabe der Erfindung ist es, eine verbesserte Offshore-Windkraftanlage vorzuschlagen.

Erfindungsgemäß wird diese Aufgabe durch die Merkmale des Anspruchs 1 gelöst. Die Offshore-Windkraftanlage umfaßt einen Schwimmkörper, welcher eine oder mehrere Windkraftkonverter trägt und der mittels eines Ankers über eine oder mehrere Trossen drehbar am Meeresgrund oder am Grund eines anderen Gewässers verankert ist, wobei der Schwimmkörper unter der Wasseroberfläche liegt. Hierdurch sind die Angriffsflächen im Bereich des Wellenschlages sehr klein. Deshalb sind die Auswirkungen des Seegangs auf die Stabilität der Anlage gering. Hierdurch wird die Robustheit der Anlage gesteigert. Die Schwimmkörper liegen vorzugsweise deutlich unter der Wasseroberfläche. Sie liegen vorzugsweise so weit unter der Wasseroberfläche, daß der Wellenschlag bzw. der Seegang keine oder doch nur eine geringe Auswirkung auf die Stabilität der Anlage hat. Vorzugsweise liegen die Schwimmkörper etwa 5 bis 10 m unter der Wasseroberfläche. Abhängig von den örtlichen Verhältnissen (Wassertiefe, durchschnittliche Windstärke, maximale Windstärke, durchschnittliche Wellenhöhe, maximale Wellenhöhe etc.) kann die Tiefe des Schwimmkörpers allerdings auch geringer oder größer sein.

Der Schwimmkörper kann aus einem oder mehreren Auftriebskörpern bestehen. Gemäß einer ersten Lösung umfaßt der Schwimmkörper einen oder mehrere Ballastkörper. Der oder die Ballastkörper sind vorzugsweise unter dem oder den Auftriebskörpern angebracht. Hierdurch wird eine grundlegende Robustheit der Anlage erreicht.

Vorzugsweise wird die Anordnung derart getroffen, daß der Massenschwerpunkt unter dem Auftriebsschwerpunkt der Anlage liegt. Das Prinzip ist vergleichbar mit Segelschiffen mit Kiel. Damit richtet sich die Anlage unter allen Bedingungen senkrecht auf. Insbesondere ist es möglich, den oder die Schwimmkörper mit unteren Querverbindungen zu versehen, die als Ballast in Vollbeton ausgeführt sind. Die obere Querverbindung kann den Auftriebskörper bilden und aus Stahlrohr sein.

Die der Erfindung zugrundeliegende Aufgabe wird femer durch die Merkmale des nebengeordneten Anspruchs 2 gelöst. Dieser Anspruch ist dadurch gekennzeichnet, daß der Schwimmkörper durch Trossen verankert ist, derart, daß sich die Windkraftanlage senkrecht aufrichtet.

Durch die Erfindung wird eine Windkraftanlage geschaffen, die das erhöhte Windangebot auf See, insbesondere auf hoher See, also auch bei größeren Wassertiefen (mehr als 20 m), nutzbar machen kann und die andererseits unkompliziert und wirtschaftlich gebaut und betrieben werden kann. Das vorgeschlagene Konzept kann mit einem großen Schwimmkörper realisiert werden, auf dem eine größere Anzahl von beispielsweise zehn Windkraftkonvertem bzw. Windgeneratoren (Rotoren) hoher Leistung (beispielsweise 1,5 MW) installiert werden kann. Dieser Schwimmkörper kann vor der Küste verankert werden, wobei sich die Windkraftanlage durch ein Drehgelenk im Anker frei drehen kann. Hierdurch wird es ermöglicht, daß sich die Windkraftanlage passiv optimal im Wind positioniert. Gegenüber herkömmlichen Anlagen entfällt eine aktive und teure Drehmechanik der Generatorgondeln. Zudem kann die Tragkonstruktion der Generatoren auf eine Lastrichtung hin mechanisch optimiert werden, was ebenfalls kostensenkend wirkt. Die Tragmasten können strömungsgünstig als Stromlinienkörper ausgeführt werden. Dadurch wird der Luvstau vor den Tragmasten verringert, was zu einer verringerten Belastung der Rotorblätter bei dessen Durchquerung führt. Ebenso wird die Schwingungsanregung der Tragmasten durch die Wirbelschleppen der Rotorblätter abgemildert. Das luftwiderstandsbedingte Neigemoment wird dadurch ebenfalls minimiert.

Durch die immer optimale Ausrichtung der gesamten Anlage (des gesamten Kraftwerks) zum Wind können die Rotoren sehr dicht gestaffelt und eine kompakte Bauweise erzielt werden. Bei einem Aufbau dieser Art kann das exzellente Windangebot auf See genutzt werden, ohne daß dies durch hohe Fundament- und Montagekosten erkauft werden muß. Der Bau der Anlage kann vollständig an Land auf einer Werft kostengünstig und schnell durchgeführt werden. Anschließend kann die Anlage durch Hochseeschlepper an ihren Standort verbracht werden. Der Strom kann über Seekabel durch das Drehgelenk im Anker in das Versorgungsnetz an der Küste eingespeist werden.

Vorteilhafte Weiterbildungen sind in den Unteransprüchen beschrieben.

Vorzugsweise ist der Schwimmkörper ein langgestreckter Schwimmkörper. Vorteilhaft ist es, wenn längs der Schwimmkörperlängsachse mehrere Windkraftkonverter montiert sind.

Eine weitere vorteilhafte Weiterbildung ist dadurch gekennzeichnet, daß der Schwimmkörper durch entsprechend lange Trossen derart verankert ist, daß sich die Längsachse des Schwimmkörpers durch die auftretenden Windkräfte passiv senkrecht zur Windrichtung einstellt. Durch die erwähnten vorteilhaften Weiterbildungen wird ein einfacherer und rentablerer Betrieb der Windkraftanlage ermöglicht.

Weitere vorteilhafte Weiterbildungen sind in den weiteren Unteransprüchen beschrieben. Sie dienen zum Ausgleich von Neigungen der Anlage gegenüber der Vertikalen und gegenüber der Windrichtung um eine vertikale Achse, zur Bestükkung der Anlage mit Windkraftkonvertem sowie zur Einleitung der Generatormomente in die Anlage; sie betreffen die Tragkonstruktion für die Windkraftkonverter, die Energieübertragung, die Verankerung und den Schutz gegen Eindringen von Wasser.

Ausführungsbeispiele der Erfindung werden nachstehend anhand der beigefügten Zeichnung im einzelnen erläutert. In der Zeichnung zeigt
- Fig. 1: eine Windkraftanlage mit einem langgestreckten Schwimmkörper in einer perspektivischen Ansicht,
- Fig. 2: die Windkraftanlage gemäß Fig. 1 in einer schematischen Ansicht von oben,
- Fig. 3: den Anker der Windkraftanlage gemäß Figuren 1 und 2 in einem Querschnitt,
- Fig. 4: eine Windkraftanlage mit einem fünfeckigen Schwimmkörper und
- Fig. 5: die Windkraftanlage gemäß Fig. 4 in einer Seitenansicht.

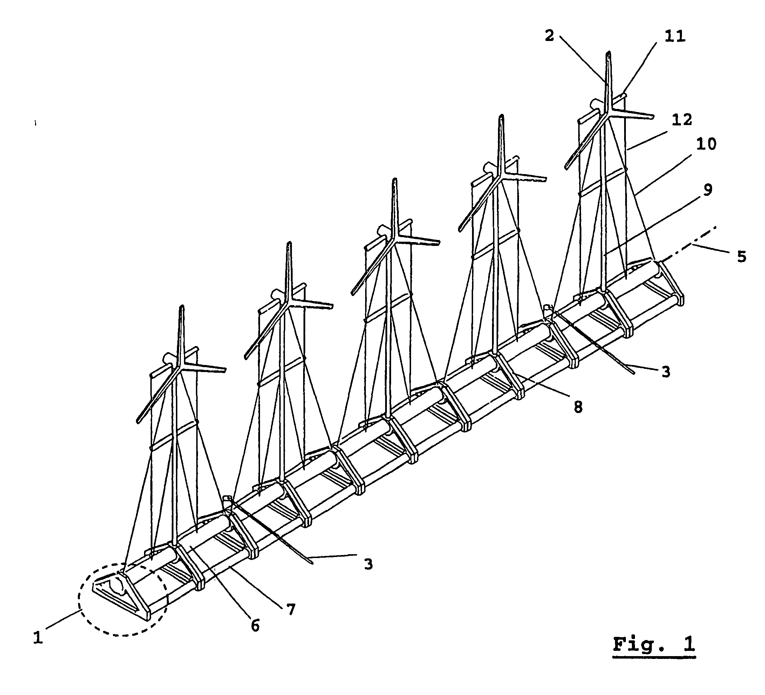

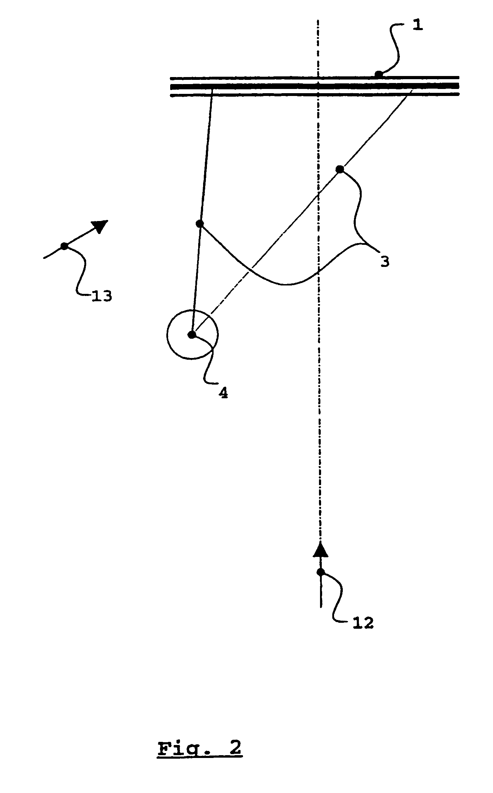

Die in Fig. 1 perspektivisch dargestellte Offshore-Windkraftanlage weist einen langgestreckten Schwimmkörper 1 auf, der mehrere Windkraftkonverter (Rotoren) 2 trägt, die längs des Schwimmkörpers 1 angeordnet sind. Der Schwimmkörper 1 ist über Trossen 3 mit einem Anker 4 verbunden. Der Anker 4 ist drehbar am Meeresgrund oder am Grund eines anderen Gewässers verankert. Der Schwimmkörper 1 ist durch entsprechend lange Trossen 3 so verankert,-daß sich seine Längsachse 5 durch die auftretenden Windkräfte passiv senkrecht zur Windnchtung einstellt. Dies ist in Fig. 2 schematisch dargestellt.

Längs der Schwimmkörperlängsachse 5 sind mehre Windkraftkonverter 2 montiert. Der Schwimmkörper 1 liegt deutlich unter der Wasseroberfläche. Wie aus Fig. 1 ersichtlich besteht der Schwimmkörper 1 aus einem Auftriebskörper 6 und zwei darunter angebrachten Ballastkörpern 7. Der Schwimmkörper 1 wird durch einen zylinderförmigen Auftriebskörper 6, der aus Stahlrohr besteht, und zwei zylinderförmigen Ballastkörpern 7, die aus Beton bestehen oder Beton umfassen, gebildet, deren Längsachsen parallel zur Schwimmkörperlängsachse 5 liegen. Der Auftriebskörper 6 und die Ballastkörper 7 sind durch dreiecksförmige, senkrecht zur Schwimmkörperlängsachse 5 angeordnete Verbindungselemente 8 verbunden, die gleichzeitig zur Aufnahme der Trägermasten 9 für die Windkraftkonverter 2 bestimmt sind. Durch eine Unterteilung und Zuordnung von Abschnitten der Auftriebskörper 6 und Ballastkörper 7 zu einzelnen Tragmasten 9 werden Module gebildet, die durch eine geeignete Verbindungstechnik zu der in Fig. 1 gezeigten mehrmoduligen Windkraftanlage zusammengefügt werden. Zum Abschluß der Module sind ebenfalls dreiecksförmige, senkrecht zur Schwimmkörperlängsachse 5 angeordnete Verbindungselemente angebracht. Die Auftriebskörper 6 und Ballastkörper 7 können zusätzlich durch diagonale Verspannungen miteinander verbunden sein (in der Zeichnung nicht dargestellt).

In den Ballastkorpern 7 sind Tanks angebracht, die in Abhängigkeit von der strömungswiderstandsbedingten Neigung der Windkraftanlage geflutet bzw. leer gepumpt werden konnen. Stattdessen oder zusätzlich können auch in den Verbindungselementen 8 Tanks angebracht sein.

Die Tragmasten 9 sind in der durch die Tragmasten 9 und die Schwimmkörperlängsachse 5 aufgespannten Ebene durch diagonale Verspannungen 10 mit dem Schwimmkörper 1 verbunden. Sie können zusätzlich in der zur Schwimmkörperlängsachse 5 senkrechten Ebene durch diagonale Verspannungen mit dem Schwimmkörper 1 verbunden sein (in der Zeichnung nicht-dargestellt). Ferner sind die Tragmasten 9 durch Gelenke mit dem Schwimmkörper 1 verbunden. Die Gelenkachse der Gelenke verläuft parallel zur Schwimmkörperlängsachse 5. Die Tragmasten können dementsprechend durch langenveränderbare Verspannungen zum Schwimmkörper 1 in Abhängigkeit von der strömungswiderstandsbedingten Neigung der Windkraftanlage zum Wind hin oder vom Wind weg geneigt werden.

Die Windkraftkonverter 2 leiten ihr Bremsmoment über horizontale Hebelarme 11 und vertikale Verspannungen 12 in den Schwimmkörper 1 ab.

Die Tragmasten 9 der Windkraftkonverter 2 sind im Bereich der Wasseroberfläche verjüngt. Am oberen Ende eines Tragmastes 9 kann eine Plattform zur Landung von Hubschraubern angebracht sein (in der Zeichnung nicht dargestellt). Der zur Hubschrauberlandeplattform nächstgelegene Rotor kann so angehalten werden, daß der Landeanflug nicht durch ein Rotorblatt behindert werden kann. Die gesamte Anlage ist durch die Innenräume der Tragmasten 9, der Schwimmkörper 1 und der dreiecksförmigen Verbindungselemente 8 begehbar. Die Innenräume der Tragmasten 9, Schwimmkörper 1 und dreiecksförmigen Verbindungselemente 8 können durch Schotten abgedichtet werden.

Die Trossen 3 zur Verankerung der Windkraftanlage können einzeln in ihrer Länge variiert werden. Die Trossen 3 sind einzeln längenverstellbar, vorzugsweise durch Seilwinden, die vorzugsweise am Schwimmkörper 1 oder an den Tragmasten 9 angebracht sind. Wie in Fig. 2 schematisch dargestellt sind die Trossen 3 derart längenverstellbar, daß eine durch verschiedene Strömungsrichtungen von Wind 12 und Wasser 13 verursachte Schiefstellung der Windkraftanlage zur Windrichtung 12 ausgeglichen wird. Die unabhängige Längenveränderbarkeit der einzelnen Trossen 3 wird zum Ausgleich einer durch verschiedene Strömungsrichtungen von Wind 12 und Wasser 13 verursachte Schiefstellung der Windkraftanlage zur Windrichtung 12 um die vertikale Achse verwendet.

Die unabhängige Längenveränderbarkeit der einzelnen Trossen 3 kann dazu verwendet werden, bei Windstille eine der Trossen soweit zu verkürzen, daß sie nahezu senkrecht zum Anker 4 verläuft. Die Trossen 3 zur Verankerung der Windkraftanlage sind vorzugsweise durch Feder-Dämpfer-Kombinationen ausgestattet. Der Kraftangriffspunkt der Trossen 3 am Schwimmkörper 1 oder an den Tragmasten 9 kann höhenverstellbar angebracht werden. Durch die Verstellung der Höhe des Kraftangriffspunkts der Trossen 3 kann die Neigung der Windkraftanlage um die Schwimmkörperlängsachse 5 reguliert werden.

Die Längenverstellbarkeit der Trossen 3 kann durch den Einsatz von Seilwinden realisiert werden, die am Schwimmkörper 1 oder an den Tragmasten 9 angebracht werden können. Die elektrische Energie kann vom Schwimmkörper oder von den Tragmasten aus über ein frei hängendes Kabel zum Anker 4 übertragen werden. Die Länge und damit der Durchhang des Kabels können durch eine angetriebene Kabeltrommel mit integriertem Schleifringkontakt eingestellt werden. Vorzugsweise ist die Kabeltrommel im Auftriebskörper 6 untergebracht. Das Kabel kann durch eine Öffnung auf der Unterseite des Auftriebskörpers geführt werden. An der Kabeldurchlaßöffnung kann eine Gleitdichtung gegen das Eindringen von Wasser angebracht sein.

Die unter Wasser liegenden Hohlräume des Schwimmkörpers 1 können durch Druckluftbeaufschlagung mit mindestens dem Druck des umgebenden Wassers gegen Eindringen von Wasser zusätzlich geschützt werden.

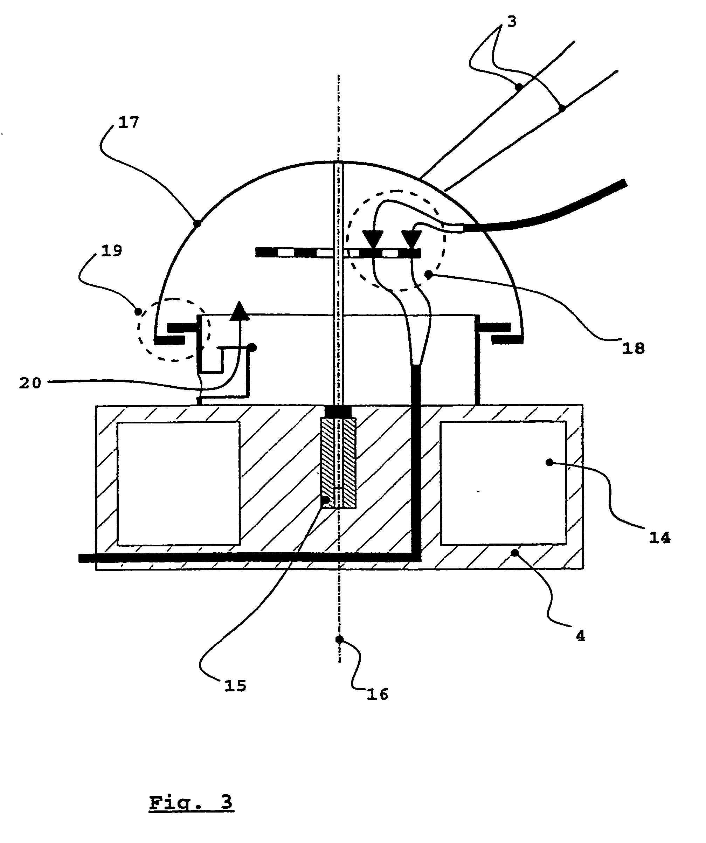

Wie insbesondere aus Fig. 3 ersichtlich wird der Anker als Senkkasten 4 ausgeführt, der Auftriebskammern 14 aufweist, die geflutet werden können. Der Anker kann am Verankerungsort durch Fluten der Auftriebskammern 14 versenkt werden. Ferner weist der Anker 4 ein Drehgelenk 15 mit senkrechter Achse 16 auf, in welches die Trossen 3 die Zugkraft einleiten. Das Drehgelenk 15 ist in einem Gehäuse 17 untergebracht, in dem über Schleifringkontakte 18, die konzentrisch zur Drehachse 16 des Gelenks 15 angebracht sind, die elektrische Energie vom drehbaren Oberteil der Verankerung auf den feststehenden Unterteil der Verankerung übertragen wird. Das Gehäuse 17 des Drehgelenks wird durch eine Schleifringdichtung 19 gegen das umgebende Wasser abgedichtet. Ferner wird das Gehäuse 17 des Drehgelenks 15 durch eine Beaufschlagung durch Druckluft des gleichen Drucks wie des umgebenden Wassers oder eines höheren Drucks zusätzlich gegen Eindringen von Wasser abgedichtet. Der Anker 4 besitzt Innenräume, die von unten durch eine verschließbare Luke 20 mit waagrechtem Öffnungsquerschnitt für Taucher zugänglich sind. Über diese Innenräume besteht Zugang zum Drehgelenksgehäuse 17. Die Luke 20 kann durch Druckluft mit dem gleichen Druck wie dem des umgebenden Wassers oder mit einem höheren Druck zusätzlich gegen Eindringen von Wasser abgedichtet werden. Die Luke 20 kann dann ohne Eindringen von Wasser geöffnet werden. Die zur Druckbeaufschlagung des Ankers 4 des Drehgelenksgehäuses 17 benötigte Druckluft wird über einen Druckluftschlauch vom Schwimmkörper 1 aus bereitgestellt. Der Druckluftschlauch kann in gleicher Weise wie das Kabel längenverstellbar sein. Vorteilhaft ist es, wenn der Druckluftschlauch in das Kabel integriert ist.

Die elektrische Energie wird vom Anker 4 mittels Seekabel zur Einspeisung in das Elektrizitätsversorgungsnetz an die Küste geleitet. Die zur Steuerung und Überwachung der Anlage benötigte Informationsübertragung geschieht durch eine in die Leistungsverkabelung integrierte oder dazu parallel verlaufende Datenübertragungsleitung.

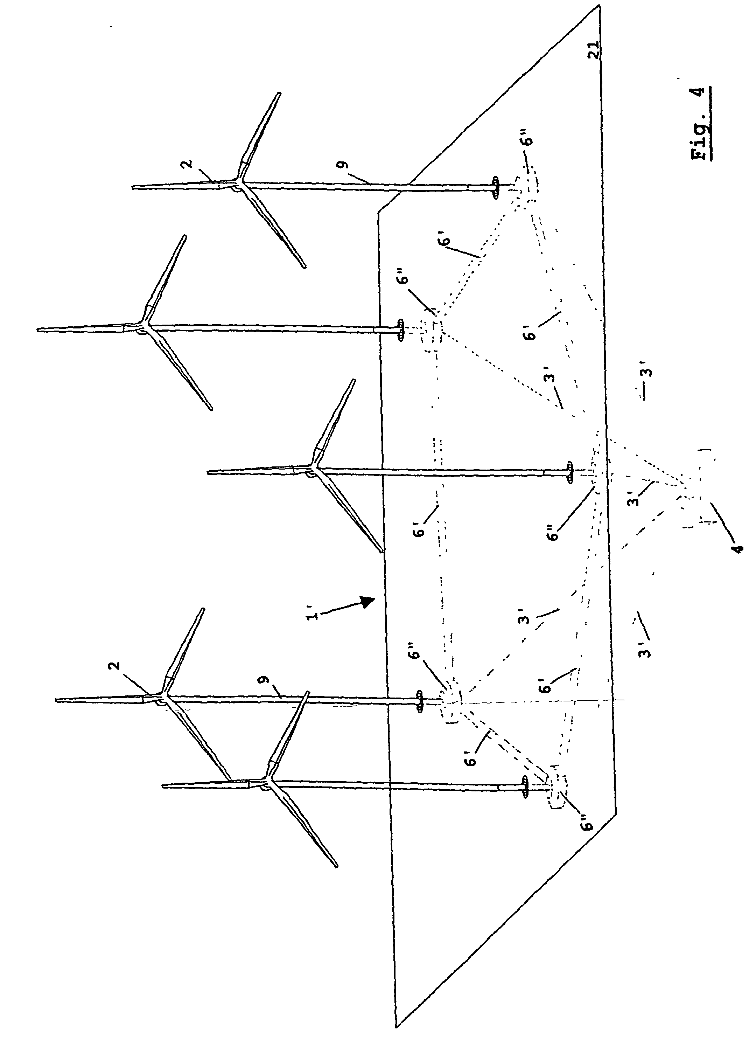

In Fig. 4 ist eine abgewandelte Ausführungsform dargestellt, bei der der Schwimmkörper 1' eine ringförmige Struktur aufweist. Bei dieser Ausführungsform wird die Windkraftanlage nicht mehr durch Ballastkörper, sondern durch die Verzurrung mit der Verankerung, die die Funktion des Ballastkörpers übemimmt, aufgerichtet. Dementsprechend ist der Schwimmkörper 1' durch entsprechend lange, in ihrer Länge veränderliche Trossen 3' derart verankert, daß die Windkraftanlage durch die Verzurrung mit der Verankerung senkrecht bzw. im wesentlichen senkrecht aufgerichtet wird. Der Schwimmkörper weist fünf Auftriebskörper 6' und/oder eine entsprechende Anzahl von tonnenförmigen Auftriebskörpern 6" auf, die im Fünfeck angeordnet sind (Ballastkorper sind nicht vorhanden.). Anstelle der in Figur 4 gezeigten regelmäßigen fünfeckigen Anordnung könnte auch eine regelmäßige oder nicht-regelmäßige Anordnung von mehr oder weniger Ecken verwendet werden, beispielsweise eine Dreieck-Anordnung.

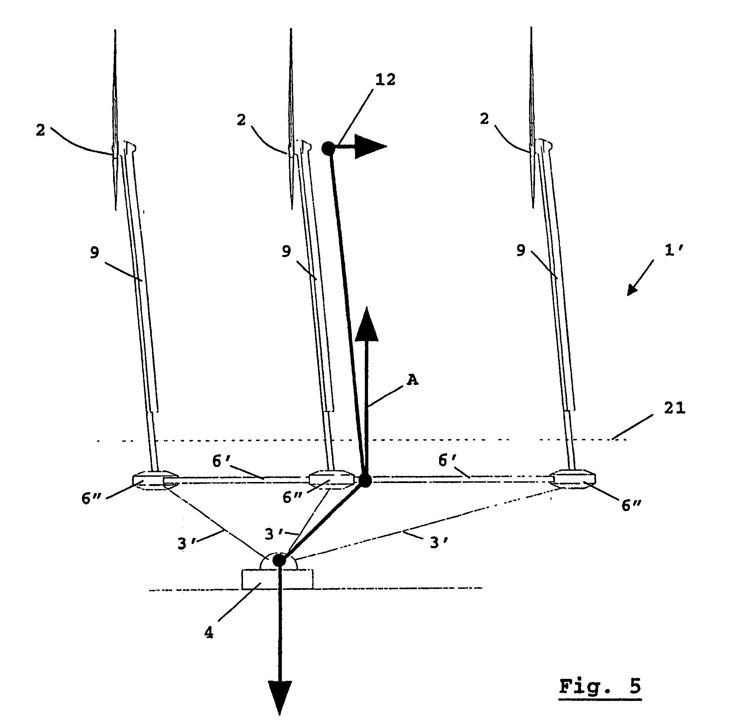

In der Fig. 5 ist die Anordnung der Fig. 4 von der Seite gezeigt. Die Auftriebskörper 6' und 6" befinden sich unter dem Wasserspiegel 21. Die Trossen 3' werden derart in ihrer Länge eingestellt, daß die Ringstruktur im wesentlichen parallel zur Wasseroberfläche 21 verläuft.

Ferner ist aus Fig. 5 die Regelung der durch den Windwiderstand eingebrachten Neigung durch Veränderung der Längen der Trossen ersichtlich. Die waagrechte Windkraft 12 greift in Höhe der Rotoren 2 an. Vom Schwerpunkt der Ringstruktur wirkt die Auftriebskraft A nach oben. Windkraft 12 und Auftriebskraft A bewirken um den Anker 4 jeweils entgegengesetzt genchtetet Momente. Die Länge der Trossen 3' wird derart eingestellt, daß das von der Auftriebskraft A um den Anker 4 erzeugte Moment (Drehrichtung: Entgegen dem Uhrzeigersinn) genauso groß ist wie das von der Windkraft 12 um den Anker 4 erzeugte Moment (Drehrichtung: Im Uhrzeigersinn). Die Länge der Trossen 3' wird also derart verändert, daß die Windkraftanlage senkrecht aufgerichtet wird.

In den Auftriebskörpern 6' und/oder 6" können Tanks angebracht sein, die zum Ausgleich einer Neigung der Windkraftanlage, die durch Strömungswiderstände oder durch andere Einflüsse erzeugt sein kann, geflutet bzw. leergepumpt werden können.

## Patentansprüche

1. Offshore-Windkraftanlage mit einem Schwimmkörper (1, 1'), welcher einen oder mehrere Windkraftkonverter (2) trägt und der mittels eines Ankers (4) über eine oder mehrere Trossen (3, 3') drehbar am Meeresgrund oder am Grund eines anderen Gewässers verankerbar ist, wobei der Schwimmkörper (1, 1') unter der Wasseroberfläche liegt,
**dadurch gekennzeichnet,**
**daß** der Schwimmkörper (1) einen oder mehrere Ballastkörper (7) umfaßt, die unter dem oder den Auftriebskörpern (6) angebracht sind.

2. Offshore-Windkraftanlage mit einem Schwimmkörper (1, 1'), welcher einen oder mehrere Windkraftkonverter (2) trägt und der mittels eines Ankers (4) über eine oder mehrere Trossen (3, 3') drehbar am Meeresgrund oder am Grund eines anderen Gewässers verankerbar ist, wobei der Schwimmkörper (1, 1') unter der Wasseroberfläche liegt,
**dadurch gekennzeichnet,**
**daß** der Schwimmkörper (1') durch Trossen (3') verankert ist, derart, daß sich die Windkraftanlage durch die Verzurrung mit der Verankerung (4) senkrecht aufrichtet.

3. Windkraftanlage nach Anspruch 1 oder 2, **dadurch gekennzeichnet, daß** der Schwimmkörper (1) ein langgestreckter Schwimmkörper (1) ist, wobei vorzugsweise längs der Schwimmkörperlängsachse (5) mehrere Windkraftkonverter (2) montiert sind.

4. Windkraftanlage nach Anspruch 3, **dadurch gekennzeichnet, daß** der Schwimmkörper (1) durch entsprechend lange Trossen (3) derart verankert ist, daß sich die Längsachse (5) des Schwimmkörpers (1) durch die auftretenden Windkräfte passiv senkrecht zur Windrichtung einstellt.

5. Windkraftanlage nach einem der vorhergehenden Ansprüche, **dadurch gekennzeichnet, daß** der Schwimmkörper (1) aus einem oder mehreren Auftriebskörpern (6) besteht.

6. Windkraftanlage nach einem der vorhergehenden Ansprüche, **dadurch gekennzeichnet, daß** der oder die Auftriebskörper (6) und der oder die Ballastkörper (7) durch Verbindungselemente (8) verbunden sind, die vorzugsweise dreieckförmig ausgestaltet sind und/oder die vorzugsweise senkrecht zur Längsachse (5) des Schwimmkörpers (1) angeordnet sind.

7. Windkraftanlage nach einem der vorhergehenden Ansprüche, **dadurch gekennzeichnet, daß** in dem oder den Ballastkörpern (7) und/oder in dem oder den Verbindungselementen (8) Tanks angebracht sind, die geflutet bzw. leer gepumpt werden können.

8. Windkraftanlage nach einem der vorhergehenden Ansprüche, **dadurch gekennzeichnet, daß** die Tragmasten (9) der Windkraftkonverter (2) durch Gelenke mit dem Schwimmkörper (1) verbunden sind.

9. Windkraftanlage nach Anspruch 8, **dadurch gekennzeichnet, daß** die Gelenkachsen der Tragmasten (9) parallel zur Längsachse (5) des Schwimmkörpers (1) verlaufen und vorzugsweise durch längenveränderbare Verspannungen zum Schwimmkörper (1) zum Wind hin oder vom Wind weg geneigt werden können.

10. Windkraftanlage nach einem der vorhergehenden Ansprüche, **dadurch gekennzeichnet, daß** die Windkraftkonverter (2) ihr Bremsmoment über horizontale Hebelarme (11) und vertikale Verspannungen (12) in den Schwimmkörper (1) ableiten.

11. Windkraftanlage nach einem der vorhergehenden Ansprüche , **dadurch gekennzeichnet, daß** die Tragmasten (9) der Windkraftkonverter (2) im Bereich der Wasseroberfläche verjüngt sind.

12. Windkraftanlage nach einem der vorhergehenden Ansprüche, **dadurch gekennzeichnet, daß** die Trossen (3) einzeln längenverstellbar sind, vorzugsweise durch Seilwinden, die vorzugsweise am Schwimmkörper (1) oder an den Tragmasten (9) angebracht sind.

13. Windkraftanlage nach Anspruch 12, **dadurch gekennzeichnet, daß** die Trossen (3) derart längenverstellbar sind, daß eine durch verschiedene Strömungsrichtungen von Wind (12) und Wasser (13) verursachte Schiefstellung der Windkraftanlage zur Windrichtung (12) ausgeglichen wird.

14. Windkraftanlage nach einem der vorhergehenden Ansprüche, **dadurch gekennzeichnet, daß** die Trossen (3) mit Feder-Dämpfer-Kombinationen ausgestattet sind.

15. Windkraftanlage nach einem der vorhergehenden Ansprüche, **gekennzeichnet durch** ein Kabel, vorzugsweise ein freihängendes Kabel, vom Schwimmkörper (1) zum Anker (4) zum Übertragen der elektrischen Energie.

16. Windkraftanlage nach Anspruch 15, **dadurch gekennzeichnet, daß** das Kabel längenverstellbar ist, vorzugsweise durch eine angetriebene Kabeltrommel, die vorzugsweise einen integrierten Schleifringkontakt aufweist.

17. Windkraftanlage nach einem der vorhergehenden Ansprüche,**dadurch gekennzeichnet, daß** der Anker als Senkkasten (4) ausgeführt wird, der Auftriebskammern (14) aufweist, die geflutet werden können.

18. Windkraftanlage nach einem der vorhergehenden Ansprüche, **dadurch gekennzeichnet, daß** der Anker (4) ein Drehgelenk (15) mit senkrechter Achse (16) aufweist, in welches die Trossen (3) die Zugkraft einleiten.

19. Windkraftanlage nach Anspruch 18, **dadurch gekennzeichnet, daß** das Drehgelenk (15) in einem Gehäuse (17) untergebracht ist, in dem die elektrische Energie von einem drehbaren Oberteil der Verankerung auf den feststehenden Unterteil der Verankerung übertragen wird, vorzugsweise über Schleifnngkontakte (18), die konzentrisch zur Drehachse (16) des Gelenks (15) angebracht sind.

20. Windkraftanlage nach einem der vorhergehenden Ansprüche, **dadurch gekennzeichnet, daß** das Gehäuse (17) des Drehgelenks (15) durch Druckluft beaufschlagbar ist, vorzugsweise derart, daß das Gehäuse **dadurch** zusätzlich gegen Eindringen von Wasser abgedichtet wird.

21. Windkraftanlage nach einem der vorhergehenden Ansprüche, **dadurch gekennzeichnet, daß** der Schwimmkörper (1') eine ringförmige Struktur aufweist.

22. Windkraftanlage nach einem der vorhergehenden Ansprüche, **dadurch gekennzeichnet, daß** die Trossen (3') in ihrer Länge veränderbar sind.

## Claims

1. Offshore wind power installation having a floating body (1, 1') which is fitted with one or more wind power converters (2) and can be anchored on the seabed or on the bottom of some other waterway by means of anchor (4) and via one or more hawsers (3, 3') such that it can rotate, with the floating body (1, 1') being under the water surface,
**characterized**
**in that** the floating body (1) comprises one or more ballast bodies (7) which are fitted under the lift body or bodies (6).

2. Offshore wind power installation having a floating body (1, 1') which is fitted with one or more wind power converters (2) and is anchored on the seabed or on the bottom of some other waterway by means of anchor (4) and via one or more hawsers (3, 3') such that it can rotate, with the floating body (1, 1') being under the water surface,
**characterized**
**in that** the floating body (1') is anchored by means of hawsers (3') in such a way that the wind power installation is aligned vertically by the lashing to the anchor (4).

3. Wind power installation according to Claim 1 or 2, **characterized in that** the floating body (1) is an elongated floating body (1), with two or more wind power converters (2) preferably being mounted along the floating body longitudinal axis (5).

4. Wind power installation according to Claim 3, **characterized in that** the floating body (1) is anchored by hawsers (3) of appropriate length in such a manner that the longitudinal axis (5) of the floating body (1) is passively set at right angles to the wind direction by the wind forces that occur.

5. Wind power installation according to one of the preceding claims, **characterized in that** the floating body (1) comprises one or more lifting bodies (6).

6. Wind power installation according to one of the preceding claims, **characterized in that** the lifting body or bodies (6) and the ballast body or bodies (7) are connected by connecting elements (8), which are preferably triangular and/or are preferably arranged at right angles to the longitudinal axis (5) of the floating body (1).

7. Wind power installation according to one of the preceding claims, **characterized in that** tanks are fitted in the ballast body or bodies (7) and/or in the connecting element or elements (8) and can be flooded or pumped empty.

8. Wind power installation according to one of the preceding claims, **characterized in that** the supporting masts (9) of the wind power converters (2) are connected to the floating body (1) by means of joints.

9. Wind power installation according to Claim 8, **characterized in that** the joint axes of the supporting masts (9) run parallel to the longitudinal axis (5) of the floating body (1) and can preferably be inclined towards the wind or away from the wind by variable-length bracing elements for the floating body (1).

10. Wind power installation according to one of the preceding claims, **characterized in that** the wind power converters (2) dissipate their braking torque into the floating body (1) via horizontal lever arms (11) and vertical bracing elements (12).

11. Wind power installation according to one of the preceding claims, **characterized in that** the supporting masts (9) for the wind power converters (2) are tapered in the area of the water surface.

12. Wind power installation according to one of the preceding claims, **characterized in that** the lengths of the hawsers (3) can be varied individually, preferably by means of cable winches, which are preferably fitted to the floating body (1) or to the supporting masts (9).

13. Wind power installation according to Claim 12, **characterized in that** the lengths of the hawsers (3) can be varied so as to compensate for any oblique position of the wind power installation with respect to the wind direction (12), caused by different flow directions of the wind (12) and water (13).

14. Wind power installation according to one of the preceding claims, **characterized in that** the hawsers (3) are equipped with spring/damper combinations.

15. Wind power installation according to one of the preceding claims, **characterized by** a cable, preferably a freely suspended cable, from the floating body (1) to the anchor (4), for the transmission of electrical power.

16. Wind power installation according to Claim 15, **characterized in that** the length of the cable can be varied, preferably by means of a driven cable drum, which preferably has an integrated slipring contact.

17. Wind power installation according to one of the preceding claims, **characterized in that** the anchor is in the form of a sunken box (4), which has lifting chambers (14) which can be flooded.

18. Wind power installation according to one of the preceding claims, **characterized in that** the anchor (4) has a rotating joint (15) with a vertical axis (16), into which the hawsers (3) introduce the tensile force.

19. Wind power installation according to Claim 18, **characterized in that** the rotating joint (15) is accommodated in a housing (17) in which the electrical power is transmitted from an upper part of the anchor, which can rotate, to the fixed lower part of the anchor, preferably via slipring contacts (18) which are fitted concentrically with respect to the rotation axis (16) of the joint (15).

20. Wind power installation according to one of the preceding claims, **characterized in that** compressed air can be applied to the housing (17) of the rotating joint (15), preferably in such a manner that the housing is in this way additionally sealed against the ingress of water.

21. Wind power installation according to one of the preceding claims, **characterized in that** the floating body (1') has an annular structure.

22. Wind power installation according to one of the preceding claims, **characterized in that** the lengths of the hawsers (3') are variable.

## Revendications

1. Eolienne en mer avec un corps flottant (1,1'), qui supporte un ou plusieurs convertisseurs (2) de la force du vent et qui peut être ancré au moyen d'une ancre (4) par une ou plusieurs aussières (3,3') d'une manière tournante au fond de la mer ou au fond d'autres eaux, où le corps flottant (1,1') se situe sous la surface de l'eau,
**caractérisée**
**en ce que** le corps flottant (1) comprend un ou plusieurs corps de ballast (7) qui sont disposés sous le ou les corps de portance (6).

2. Eolienne en mer avec un corps flottant (1,1'), qui supporte un ou plusieurs convertisseurs (2) de la force du vent et qui peut être ancré au moyen d'une ancre (4) par une ou plusieurs aussières (3,3') d'une manière tournante au fond de la mer ou au fond d'autres eaux, où le corps flottant (1,1') se situe sous la surface de l'eau,
**caractérisée**
**en ce que** le corps flottant (1') est ancré par des aussières (3') de façon que l'éolienne, en raison de l'amarrage avec l'ancrage (4), se dresse verticalement.

3. Eolienne selon la revendication 1 ou 2, **caractérisée en ce que** le corps flottant (1) est un corps flottant oblong (1), où de préférence, le long de l'axe longitudinal (5) du corps flottant, plusieurs convertisseurs (2) de la force du vent sont montés.

4. Eolienne selon la revendication 3, **caractérisée en ce que** le corps flottant (1) est ancré par des aussières (3) d'une longueur correspondante de façon que l'axe longitudinal (5) du corps flottant (1), par suite des forces de vent qui se produisent, s'établit d'une manière passive perpendiculairement à la direction du vent.

5. Eolienne selon l'une des revendications précédentes, **caractérisée en ce que** le corps flottant (1) est constitué d'un ou de plusieurs corps de portance (6).

6. Eolienne selon l'une des revendications précédentes, **caractérisée en ce que** le ou les corps de portance (6) et le ou les corps de ballast (7) sont reliés par des éléments de liaison (8) qui sont réalisés de préférence en forme triangulaire et/ou qui sont disposés de préférence perpendiculairement à l'axe longitudinal (5) du corps flottant (1).

7. Eolienne selon l'une des revendications précédentes, **caractérisée en ce que** des cuves sont disposées dans le ou les corps de ballast (7) et/ou dans le ou les éléments de liaison (8), qui peuvent être inondées respectivement vidées par pompage.

8. Eolienne selon l'une des revendications précédentes, **caractérisée en ce que** les mâts porteurs (9) des convertisseurs (2) de la force du vent sont reliés par des articulations au corps flottant (1).

9. Eolienne selon la revendication 8, **caractérisée en ce que** les axes d'articulation des mâts porteurs (9) s'étendent parallèlement à l'axe longitudinal (5) du corps flottant (1) et peuvent être inclinés de préférence par des haubannages modifiables en longueur au corps flottant (1) vers le vent ou au loin du vent.

10. Eolienne selon l'une des revendications précédentes, **caractérisée en ce que** les convertisseurs (2) de la force du vent évacuent leur couple de freinage par des bras de levier horizontaux (11) et des haubannages verticaux (12) dans le corps flottant (1).

11. Eolienne selon l'une des revendications précédentes, **caractérisée en ce que** les mâts porteurs (9) des convertisseurs (2) de la force du vent sont diminués dans la zone de la surface de l'eau.

12. Eolienne selon l'une des revendications précédentes, **caractérisée en ce que** les aussières (3) sont ajustables en longueur individuellement, de préférence par des treuils à câble qui sont disposés de préférence au corps flottant (1) ou aux mâts porteurs (9).

13. Eolienne selon la revendication 12, **caractérisée en ce que** les aussières (3) sont ajustables en longueur de façon qu'une position en biais de l'éolienne, provoquée par des directions d'écoulement différentes du vent (12) et de l'eau (13), est égalisée dans la direction du vent (12).

14. Eolienne selon l'une des revendications précédentes, **caractérisée en ce que** les aussières (3) sont équipées d'une combinaison amortisseur- ressort.

15. Eolienne selon l'une des revendications précédentes, **caractérisée par** un câble, de préférence un câble pendant librement, du corps flottant (1) à l'ancre (4) pour la transmission de l'énergie électrique.

16. Eolienne selon la revendication 15, **caractérisée en ce que** le câble est ajustable en longueur, de préférence par un tambour de câble entraîné, qui présente de préférence un contact à bagues collectrices intégré.

17. Eolienne selon l'une des revendications précédentes, **caractérisée en ce que** l'ancre est réalisée comme caisson de fonçage (4) qui présente des chambres de portance (14) qui peuvent être remplies d'eau.

18. Eolienne selon l'une des revendications précédentes, **caractérisée en ce que** l'ancre (4) présente une articulation tournante (15) avec un axe vertical (16), dans laquelle les aussières (3) introduisent la force de traction.

19. Eolienne selon la revendication 18, **caractérisée en ce que** l'articulation tournante (15) est logée dans un boîtier (17), dans lequel l'énergie électrique est transmise d'une partie supérieure tournante de l'ancrage à la partie inférieure fixe de l'ancrage, de préférence par des contacts à bagues collectrices (18) qui sont disposés concentriquement à l'axe de rotation (16) de l'articulation (15).

20. Eolienne selon l'une des revendications précédentes, **caractérisée en ce que** le boîtier (17) de l'articulation tournante (15) peut être chargé en air comprimé, de préférence de façon que le boîtier soit ainsi rendu étanche additionnellement à l'encontre d'une pénétration d'eau.

21. Eolienne selon l'une des revendications précédentes, **caractérisée en ce que** le corps flottant (1') présente une structure annulaire.

22. Eolienne selon l'une des revendications précédentes, **caractérisée en ce que** la longueur des aussières (3') peut être modifiée.
